# EUROPÄISCHE PATENTSCHRIFT

(11) **EP 0 346 644 B1**
(45) Veröffentlichungstag und Bekanntmachung des Hinweises auf die Patenterteilung: **23.02.1994**
(21) Anmeldenummer: 89109125.8
(22) Anmeldetag: 20.05.1989
(51) Int. Cl.: B29C 43/58, B29C 67/14

(54) **Verfahren zur Dosierung der Materialmenge bei der Herstellung von Formteilen aus härtbaren Formmassen**
Method for measuring out the amount of material used for the production of formed parts made from a hardenable moulding compound
Procédé de dosage de la quantité de matière lors de la fabrication de pièces moulées en matériau durcissable

(30) Priorität: 11.06.1988 DE 3819916
(43) Veröffentlichungstag der Anmeldung: 20.12.1989
(73) Patentinhaber: Umformtechnik ERFURT GmbH, D-99086 Erfurt (DE)
(72) Erfinder: Brüssel, Richard, D-7519 Sulzfeld (DE)

(56) Entgegenhaltungen:
- EP-A- 0 062 991
- EP-A- 0 313 155
- US-A- 4 076 780
- INTERNATIONAL POLYMER SCIENCE AND TECHNOLOGY, Band 11, Nr. 9, 1984, Seiten T/6-T/12, Shawbury, Shrewsbury, GB; G. MENGES et al.: "Modern methods of processing fibre-reinforced plastics"

## Beschreibung

Die Erfindung betrifft ein Verfahren zur Dosierung der Materialmenge bei der Herstellung von Formteilen aus härtbaren Formmassen nach dem Oberbegriff des Anspruchs 1.

Eine programmierbare Geschwindigkeits- und Kraft-Regelung für eine gattungsgemäße Presse ist z.B. aus der US-A-4 076 780 vorbekannt. Die dort beschriebene Presse besitzt vier jeweils an einer Ecke des die untere Formhälfte tragenden Pressentisches angeordnete Meßtaster, welche die Abstände bzw. die Parallelität des die obere Formhälfte tragenden Pressenstößels vom Pressentisch ermitteln und zur Regelung der Preßgeschwindigkeit und der Preßkraft mittels eines Gegenhaltesystems verwenden. Hierzu ist das aus den vier Meßtastern bestehende Wegmeßsystem mit einer Steuerung verbunden, die über servo-gesteuerte Hydraulikventile die hydraulischen Gegenhalter an den vier Ecken des Pressentisches steuert, die der über den Pressenstößel eingebrachten Preßkraft entgegenwirken. Hierdurch lassen sich durch ungenaue Pressenstößelführung hervorgerufene poröse Stellen im fertigen Formteil vermeiden.

Um die Verarbeitung von härtbaren Formmassen (sog. SMC = sheet moulding compound) zu Formteilen mittels Pressen wirtschaftlich durchführen zu können, wird eine weitgehende Automatisierung angestrebt. Insbesondere gilt das für die Verfahrensschritte, die zwischen der Harzmatte als Vormaterial und dem fertigen Formteil liegen. Bei den bekannten Verfahrensweisen wird die auf Rollen gewickelte folienbeschichtete Harzmatte abgespult, von der Folienbeschichtung befreit und dann zugeschnitten. Danach werden die Zuschnitte gewogen paketiert bzw. dosiert, bevor sie der Presse zugeführt werden. Nach der Entnahme des fertigen Formteils aus dem Preßwerkzeug muß das Formteil ggf. noch entgratet werden.

Bei den geschilderten Arbeitsgängen macht die Konsistenz der Harzmatten jedoch Probleme. Das in der Praxis vorkommende obere bzw. untere Flächengewicht der Harzmatte weicht oftmals stark, zum Teil erheblich über 5 %, vom idealen Mittelwert ab. Dies kann zu erheblichen Schwankungen der Formteil-Dicke sowie auch zur starken Gratbildung an den Formteilen führen.

Es ist bekannt, die Harzmattenpakete für ein Formteil abzuwiegen und Unter.- bzw. Übergewichte durch Material-Zugaben bzw. -Entnahmen (Zuschnittskorrekturen) auszugleichen. Hierbei werden jedoch spezifische Gewichtstoleranzen der zu Mattenpaketen aufeinander gestapelten einzelnen Harzmattenzuschnitte nicht berücksichtigt, was durch die dadurch bedingten unterschiedlichen Rauminhalte zu größeren Unterschieden in der Dicke von Formteil zu Formteil führen kann.

Nach dem Stand der Technik ist es ferner bekannt, die geschnittenen Harzmattenlagen (Zuschnitte) einzeln zu wiegen und bei Gewichtsabweichungen die nachfolgend zu schneidenden Harzmattenlagen in ihrer Fläche zu korrigieren. Dadurch kann man zwar Gewichtsabweichungen bei den einzelnen Harzmattenpaketen gering halten, jedoch kann - trotz der großen Aufwendigkeit dieses Verfahrens - auch hierbei das unterschiedliche Volumen der Harzmattenzuschnitte ebenfalls nicht berücksichtigt werden. Außerdem bleiben auch noch andere vom Preßvorgang abhängige Einflüsse, wie z.B. eine auf unterschiedlichen Preßkräften beruhende verschieden ausfallende Gratbildung an den fertigen Formteilen, ohne Berücksichtigung.

Es ist daher Aufgabe der vorliegenden Erfindung, für ein Verfahren der eingangs genannten Art Maßnahmen anzugeben, durch die in einem weitgehend automatisierten Prozeß ein gleichbleibendes Volumen der Formteile bei weitgehend gleicher Qualität und Porenfreiheit gewährleistet ist.

Diese Aufgabe wird dadurch gelöst, daß die Formteil-Dicken mittels des Wegmeßsystems der Presse zu einem definierten Zeitpunkt gemessen und der bzw. die Meßwert(e) als Regelgröße für die Größe der Zuschnittsfläche verarbeitet wird (werden).

Das erfindungsgemäße Verfahren hat vor allem den Vorteil, daß,da die Harzmattenzuschnitte ausschließlich volumetrisch dosiert werden, auf ein Wiegen der Harzmattenzuschnitte verzichtet werden kann, wodurch die komplette Wiegestation eingespart wird.

Das neue Verfahren nutzt aus, daß bei den bekannten parallellauf-geregelten Pressen, bei denen auch die Geschwindigkeit und die Kraft des Pressenstößels bzw. auch des beaufschlagbaren Pressentisches geregelt wird, ohnehin ein Wegmeßsystem bildende Wegmeßtaster vorhanden sind. Die Signale dieses Wegmeßsystems werden im Rahmen der Parallellaufregelung auf ein elektro-hydraulisches Servoventilsystem gegeben, das die auf den Pressenstößel wirkenden Kippmomente, die z.B. aus dem Werkzeugfüllvorgang resultieren, unmittelbar ausgleicht und dadurch eine hohe Parallelität der Tisch- und Stößel-Aufspannflächen während des Preßhubes garantiert. Die dort anfallenden Meßwerte werden erfindungsgemäß nunmehr zusätzlich zu ihrer ursprünglichen Verwendung zur Regelung der Zuschnittsflächen-Größe verwendet. Welche Maße der Zuschnittsfläche dabei herangezogen werden, kann von der Flächenform des Zuschnitts abhängen, die zwar in der Regel, aber nicht in jedem Fall rechteckig ist. Bei rechteckigen Formen kann die Regelung auf einfache Weise dadurch bewerkstelligt werden, daß der Antrieb eines Vorschubapparates für die Harzmattenbahn als Stellglied des Regelkreises verwendet wird. Dieser Antrieb bestimmt dann die Größe des Vorschubweges und damit das Maß der Breite des jeweiligen Zuschnitts. Die Meßwerterfassung für den Vorschubweg erfolgt vorzugsweise direkt an dem Vorschubapparat oder auch indirekt über einen Winkeldekoder an der Motorwelle, die eine Rolle zum Abspulen der Harzmattenbahn antreibt.

Daß bei dieser Regelungsart die Ausregelung der Größe der Zuschnittsfläche erst am nächsten oder übernächsten Zuschnitt erfolgt, wirkt sich auch bei großen Flächengewichtstoleranzen der Harzmattenbahn nicht nachteilig aus, denn in den handelsüblichen Harzmattenbahnen treten in der Regel keine abrupten, sondern nur solche Schwankungen auf, bei denen sich gerinfügig zu- bzw. abnehmende Änderungen des spezifischen Gewichts, des Flächengewichts oder auch der Dicke über eine längere Strecke hinziehen und dadurch durch die Regelung ohne weiteres beherrschbar sind.

Nach einer bevorzugten Ausführungsform der Erfindung wird die aktuell gemessene Formteil-Dicke mit einem vorgegebenen Sollwert verglichen und aus der Differenz ein Korrekturwert ermittelt, der mit dem Basiswert für die Größe der Zuschnittsfläche verknüpft wird. Durch iterative Anwendung des erfindungsgemäßen Verfahrens kann auf diese Weise der regelungsspezifische Faktor nach und nach optimiert werden, so daß ein adaptiver Regelkreis entsteht, mittels dessen die Formteil-Dicke immer feiner ausgeregelt wird.

Bevorzugt wird der korrigierte Basiswert als Eingangssignal wieder für den Antrieb des Vorschubs für die Harzmattenbahn verwendet.

Vorzugsweise wird die Formteil-Dicke an den vier Aufspannflächenecken der Pressen gemessen und der hieraus berechnete Mittelwert als Regelgröße verwendet. Nach einer weiteren Ausgestaltung der Erfindung wird die Formteil-Dicke mit hochauflösende digital/inkrementalen Meßtastern gemessen.

Es wird weiter vorgeschlagen, die Formteil-Dicke am Ende der Aushärtezeit zu messen. Das bringt den Vorteil einer noch größeren Genauigkeit, weilauf diese Weise berücksichtigt wird, daß sich die Formteil-Dicke im Verlauf der Aushärtezeit noch ändern kann.

Weitere Vorteile ergeben sich daraus, daß werkzeugspezifische Verformungen, wie Federung und thermische Ausdehnung in der Presse gemessen und als zusätzliche Korrekturgrößen in die Regelung einbezogen werden.
Ein Ausführungsbeispiel des Verfahrens nach der Erfindung wird anhand der Zeichnung nachfolgend näher erläutert. Es zeigt
- Fig. 1: eine schematische Darstellung einer Harzmatten-Zuführeinrichtung und
- Fig. 2: ein zugehöriges Regelungsschema.

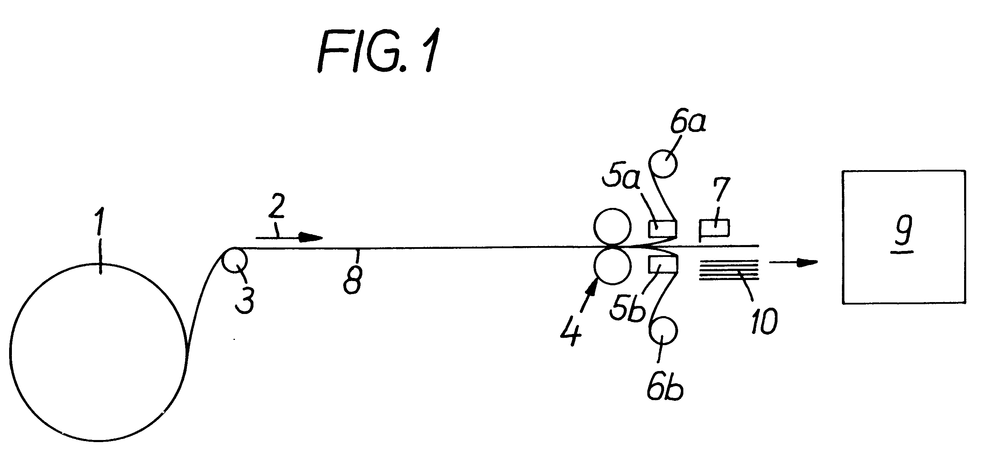

Wie in Fig. 1 gezeigt, wird von einem Harzmattencoil 1 eine Harzmattenbahn 8 in Richtung des Pfeiles 2 abgerollt und über eine Umlenkrolle 3 einem mit Rollen versehenen Vorschubapparat 4 einer Harzmattenschneidmaschine zugeführt, der die Harzmattenbahn zu Klemmbacken 5a und 5b transportiert. Die Klemmbacken 5a und 5b werden vorzugsweise pneumatisch betätigt und spannen die Harzmattenbahn 8 während der Querschneideoperation, die durch eine quer zu Förderrichtung der Harzmattenbahn bewegbare Schneidvorrichtung 7 erfolgt, beidseitig ein. Die abgeschnittenen Zuschnitte werden von einer nicht dargestellten Vorrichtung aufgefangen und als gestapeltes Zuschnittspaket 10 dem Preßwerkzeug 9 zugeführt.

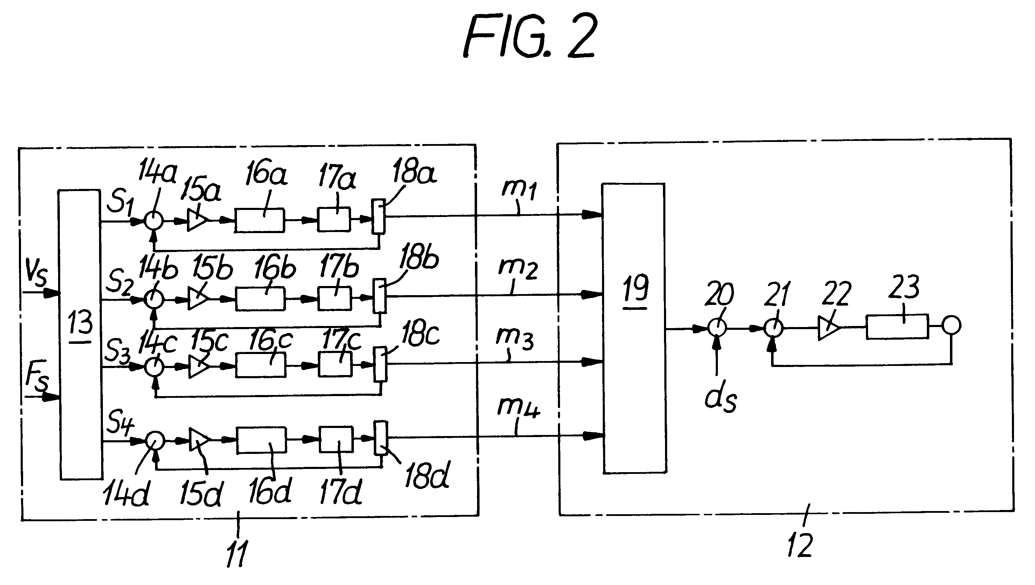

Wie aus Fig. 2 ersichtlich, sind ein Regelkreis 11 für die Preßkraft, die Preßgeschwindigkeit und die Parallelität der Werkzeuge und ein Regelkreis 12 für die Formteil-Dicke dergestalt miteinander verknüpft, daß die Meßwerte der Formteil-Dicken von beiden Regelkreisen 11, 12 verarbeitet werden. Mit 13 ist die Sollwerteingabe für die Preßgeschwindigkeit vₛ und die Preßkraft Fₛ bezeichnet. Unter Berücksichtigung dieser Vorgaben werden entsprechende Steuersignale s₁ bis s₄ über diesen zugeordnete Vergleicher 14a bis 14d und nachgeschaltete Signalverstärker 15a bis 15d auf Steuerventile 16a bis 16d von vier Preßzylindern 17a bis 17d gegeben, deren Kolbenstangen auf den Pressenstößel einwirken.

Jeder der Preßzylinder 17a bis 17d der nicht dargestellten Presse ist einer der vier Ecken der Tischfläche außerhalb des Werkzeugeinbauraumes der Presse zugeordnet und als kurzhubiger Gegenhaltezylinder ausgebildet und jeweils mit einem inkrementalen Wegmeßsystem versehen, das ebenfalls an den vier Ecken der Tischfläche bzw. der Aufspannplatte angeordnet ist. Aus dem Abstand, der von den Meßtastern 18a bis 18d des Wegmeßsystems gemessen und als Meßwert weiterverarbeitet wird, erhält man ein Kriterium für den Pressenparallellauf bzw. den Abweichungen hiervon und gleichzeitig ein Maß für die aktuelle Formteil-Dicke.

Bei der verwendeten bekannten Pressenparallellaufregelung werden die Meßwerte der Meßtaster 18a bis 18d zu den Vergleichern 14a bis 14d zurückgeführt (sog. Rückkopplung) und zur Korrektur der aktuellen Preßkraft und der aktuellen Preßgeschwindigkeit verwertet.

Die Formteil-Dickenregelung unter Verknüpfung mit der Pressenparallellaufregelung nach der vorliegenden Erfindung läuft im einzelnen wie folgt ab.

Die z.B. am Ende der Aushärtezeit abgegriffenen Meßsignale m₁ bis m₄ der Formteil-Dicke werden einem Mittelwertbildner 19 zugeführt, der den errechneten Mittelwert an einen Vergleicher 20 weitergibt, wo dieser Mittelwert mit einer eingebbaren Solldicke dₛ verglichen wird. Hieraus wird ein neuer korrigierter Basiswert für die Größe der Zuschnittsfläche, insbesondere der vorgeschobenen Zuschnittsbreite der Harzmattenbahn gebildet, der einem nachgeschaltete Vergleicher 21, einem Signalverstärker 22 und schließlich als Stellwert einer elektromechanischen Vorschubeinheit 23 des Vorschubapparats 4 zugeführt wird. An dem Vorschubapparat 4 der Harzmattenschneidmaschine oder auch an einer Anzeigevorrichtung für die Winkeldekoderstellung an dem Antrieb des Harzmattencoils 1 werden jeweils der Istwert des Vorschubs bzw. die aktuellen Zuschnittsmaße überwacht und die betreffenden Meßwerte zu dem Vergleicher 21 zurückgeführt. So wird nach und nach die Zuschnittsfläche iterativ so lange geändert, bis die gewünschte Formteil-Dicke erzielt ist.

Die Lage der Schnitte in der Harzmattenbahn durch die Schneidvorrichtung 7 wird ebenfalls über die oben näher erläuterte Steuerung der Vorschubbewegung festgelegt. Bei Beginn der Harzmattenverarbeitung zur Formteilherstellung sind für die Regelung einige Grundgrößen vorzugeben, woraus der übergeordnete Rechner anschließend die benötigten abhängigen Werte errechnet. Zu diesen Grundgrößen gehören das ideale Harzmatten-Flächengewicht, die gewünschten Werte für Formteil-Gewicht und Formteil-Dicke sowie ggf. das quer zur Vorschubrichtung gemessene Maß der Harzmattenbahn.

Zweckmäßigerweise wird die gesamte Pressen- aber auch die Zuschnittssteuerung als speicherprogrammierbare Steuerung ausgeführt.

## Patentansprüche

1. Verfahren zur Dosierung der Materialmenge bei der Herstellung von Formteilen aus härtbaren Formmassen, bei dem eine Harzmattenbahn zugeschnitten und die einzelnen Zuschnitte zu Mattenpaketen zusammengelegt und dem Werkzeug einer parallellauf-geregelten, mit einem Wegmeßsystem für den Abstand der Aufspannplatten bzw. der beiden Werkzeughälften versehenen Presse zugeführt werden, wo die Mattenpakete als Formteil kompaktiert werden,
**dadurch gekennzeichnet,**
daß die Formteil-Dicken mittels des Wegmeßsystems zu einem definierten Zeitpunkt gemessen und der bzw. die Meßwert(e) als Regelgröße für die Größe der Zuschnittsfläche verarbeitet wird (werden).

2. Verfahren nach Anspruch 1, dadurch gekennzeichnet, daß der Meßwert der Formteil-Dicke als Regelgröße für den der Breite der Zuschnittsfläche entsprechenden Vorschub der zugeführten Harzmattenbahn dient.

3. Verfahren nach Anspruch 1 oder 2, dadurch gekennzeichnet, daß die aktuell gemessene Formteil-Dicke mit einem vorgegebenen Sollwert verglichen und aus der Differenz ein Korrekturwert ermittelt wird, der mit dem Basiswert für die Größe der Zuschnittsfläche verknüpft wird.

4. Verfahren nach Anspruch 3, dadurch gekennzeichnet, daß der durch die Verknüpfung korrigierte Basiswert als Eingangssignal für den Antrieb des Vorschubs der Harzmattenbahn dient.

5. Verfahren nach einem der Ansprüche 1 bis 4, dadurch gekennzeichnet, daß die Formteil-Dicke an den vier Aufspannflächenecken der Presse gemessen wird und der hieraus berechnete Mittelwert als Regelgröße dient.

6. Verfahren nach Anspruch 5, dadurch gekennzeichnet, daß die Formteil-Dicke mit hochauflösenden digital/inkrementalen Meßtastern gemessen wird.

7. Verfahren nach einem der Ansprüche 1 bis 6, dadurch gekennzeichnet, daß die Formteil-Dicke am Ende der Aushärtezeit gemessen wird.

8. Verfahren nach einem der Ansprüche 1 bis 7, dadurch gekennzeichnet, daß werkzeugspezifische Verformungen, wie Federung und thermische Ausdehnung, in der Presse oder am Werkzeug ermittelt und als zusätzliche Korrekturgrößen in die Regelung einbezogen werden.

9. Verfahren nach einem der Ansprüche 1 bis 7, dadurch gekennzeichnet, daß der Abstand im unmittelbaren Bereich des Werkzeugs an dessen Trennfläche gemessen und als Regelgröße verwendet wird.

## Claims

1. Method of dosing the quantity of material when manufacturing preforms from hardenable moulding material, wherein a web of resin-impregnated mat is cut up and the individual blanks are overlaid to form stacks of mats and are fed to the tool of a press, which is controlled for parallel operation and is provided with a position measuring system for the clearance of the clamping plates or of the two tool halves, where the mat stacks are compacted as a preform,
**characterized in that**
the preform thicknesses are measured by the position measuring system at a defined moment of time and the measured value or values is/are processed as a controlled variable for the size of the blank surface area.

2. Method according to claim 1, characterized in that the measured value of the preform thickness is used as a controlled variable for the feed, corresponding to the width of the blank surface area, of the supplied web of resin-impregnated mat.

3. Method according to claim 1 or 2, characterized in that the actually measured preform thickness is compared to a preselected setpoint value and, from the difference, a correction value is determined which is combined with the basic value for the size of the blank surface area.

4. Method according to claim 3, characterized in that the basic value corrected by the combination is used as an input signal for the drive of the feed of the web of resin-impregnated mat.

5. Method according to one of claims 1 to 4, characterized in that the preform thickness is measured at the four corners of the clamping surface of the press and the mean value calculated therefrom serves as a controlled variable.

6. Method according to claim 5, characterized in that the preform thickness is measured by high-resolution digital-incremental touch probes.

7. Method according to one of claims 1 to 6, characterized in that the preform thickness is measured at the end of the curing period.

8. Method according to one of claims 1 to 7, characterized in that tool-specific deformations, such as resilience and thermal expansion, are determined in the press or at the tool and are included as additional correcting quantities in the control process.

9. Method according to one of claims 1 to 7, characterized in that the clearance is measured in the direct vicinity of the tool at its interface and is used as a controlled variable.

## Revendications

1. Procédé pour doser la quantité de matériau lors de la fabrication de préformés en matières moulables durcissables, procédé pour lequel une bande de mats imprégnés de résine est coupée et les différentes pièces découpées sont assemblées en paquets de mats et amenées à l'outil d'une presse réglée sur la marche en parallèle et munie d'un système de mesure de déplacement pour l'écartement entre les plateaux mobiles ou entre les deux moitiés d'outil, presse où les paquets de mats sont compactés en tant que préformé, caractérisé en ce que les épaisseurs du préformé sont mesurées à un moment défini au moyen du système de mesure de déplacement et en ce que la ou les valeurs mesurées sont converties en grandeurs réglées pour la taille de la surface de coupe.

2. Procédé selon la revendication 1, caractérisé en ce que la valeur mesurée de l'épaisseur du préformé sert de grandeur réglée pour l'avancement de la bande de mats imprégnés de résine transportée, avancement correspondant à la largeur de la surface de coupe.

3. Procédé selon les revendications 1 ou 2, caractérisé en ce que l'épaisseur du préformé mesurée actuellement est comparée à une valeur théorique donnée et en ce qu'une valeur de correction qui est combinée à la valeur de base pour la grandeur de la surface de coupe est déterminée à partir de la différence.

4. Procédé selon la revendication 3, caractérisé en ce que la valeur de base corrigée par cette combinaison sert de signal d'entrée pour la commande de l'avancement de la bande de mats imprégnés de résine.

5. Procédé selon l'une des revendications 1 à 4, caractérisé en ce que l'épaisseur du préformé est mesurée aux quatre angles des plateaux mobiles de la presse et en ce que la valeur moyenne calculée à partir de cette mesure sert de grandeur de réglage.

6. Procédé selon la revendication 6, caractérisé en ce que l'épaisseur du préformé est mesurée avec des palpeurs incrémentiels/numériques de mesure à haute résolution.

7. Procédé selon l'une des revendications 1 à 6, caractérisé en ce que l'épaisseur du préformé est mesurée à la fin de la durée de durcissement.

8. Procédé selon l'une des revendications 1 à 7, caractérisé en ce que des déformations spécifiques à l'outil, comme la suspension élastique et la dilatation thermique, sont détectées dans la presse ou sur l'outil et sont intégrées dans le réglage en tant que grandeurs de correction supplémentaires.

9. Procédé selon l'une des revendications 1 à 7, caractérisé en ce que l'écartement dans la zone directe de l'outil est mesuré sur la surface de séparation de celui-ci et utilisé en tant que grandeur réglée.
